# EUROPEAN PATENT SPECIFICATION

(11) **EP 1 489 778 B1**
(45) Date of publication and mention of the grant of the patent: **02.11.2006**
(21) Application number: 03013158.5
(22) Date of filing: 11.06.2003
(51) Int. Cl.: H04L 12/24

(54) **Method and apparatus for disaster recovery of an IP network providing geographic redundancy**
Verfahren und Vorrichtung zur Behebung katastrophaler Fehler eines IP Netzes durch Bereitstellung geographischer Redundanz
Procédé et appareil de rétablissement en cas de désastre par redondance géographique pour un réseau IP

(43) Date of publication of application: 22.12.2004
(73) Proprietor: SIEMENS AKTIENGESELLSCHAFT, 80333 München (DE)
(72) Inventor: Köpp, Jörg, 81476 München (DE); Küchenhoff, Stefan, Dr., 80797 München (DE); Laghi, Giovanni, 86415 Mering (DE)

(56) References cited:
- EP-A- 0 898 399
- US-A- 5 835 696
- US-A- 6 148 410
- US-A1- 2003 058 796

## Description

The present invention relates to disaster recovery and, more particularly, to recovery of IP (Internet Protocol) network based services that are out of service due to a disaster.

The destruction, or partial destruction, of an IP network would paralyze a great part of a customers network. In recent times, for example, there have been disasters both natural and artificial that have resulted in the outage of call services to customers for days. In the case of a serious emergency, such as an earthquake or terrorist attack, for example, an outage of the network is likely to add to the chaos and may even jeopardize rescue of victims or the response of the police to a dangerous situation.

In the event of a disaster, the call switching centers are most likely to be affected. This is because the switching center is typically located in a central, or public, location. Whereas, the dependent units are more likely to be spread out over a geographic area. Thus, the switching centers are more prone to suffering from a terrorist attack or an earthquake, which tend to have the severest effect in metropolitan areas. In that case, the switching would be destroyed and all call services would be interrupted. What is needed is a system or process that provides for geographic redundancy of the switching system.

It is an object of the present invention to provide disaster recovery for services provided by an IP network.

US Patent 6,148,410 issued on Nov. 14, 2000 to Baskey et al. and assigned to International Business Machines (IBM), discloses a fault tolerant recoverable connection device and methods. Baskey provides standby routers in case that an active router fails. Baskey does not consider the case where the call center fails, but only a router. Thus, Baskey does not resolve the current problem that a call center is shut down due to natural disaster or terrorism.

EP A 0 898 399 describes a method and apparatus for providing back-up management of a netwrok element in a multi-tiered network management system. This patent describes a secondary element manager for assuming control of communications,

It is an object of the present invention to provide disaster recovery for a working area of an IP network.

It is an object of the present invention to provide disaster recovery of the call switching center of the IP network.

It is an object of the present invention to provide disaster recovery of a replacement area comprising at least a switch and dependent units that provide call services to the IP network.

In accordance with the present invention there is provided a method for disaster recovery of an IP network. A working area includes at least a switch for routing traffic through the IP network. A backup area includes a similar functionality. In the method, at least a first mode is provided wherein the working area is active and routes traffic through the IP network, the backup area is maintained in standby and IP addresses relating to the traffic are stored in a storage area. A second mode is provided wherein, when the working area is inoperable due to disaster, the backup is activated such that the backup area routes the traffic through the IP network with the IP addresses stored in the storage area.

In accordance with another aspect of the present invention, a disaster recovery system for an IP network is provided. A working area including at least a switch that is active in a first mode for routing traffic through the IP network according to an IP address associated with the traffic. A backup area including at least a switch is in standby in the first mode and active in a second mode when the working area is inoperable due to a disaster. A storage area stores IP addresses utilized by the working area in the first mode and reads the IP addresses to the backup area in the second mode.

The present invention shall be described with reference to the following figures. However, it should be kept in mind that the figures are merely examples:
Figure 1 illustrates the IP network of the present invention;
Figure 2 is a table of the modes of the present invention;
Figure 3A illustrates the first mode of the present invention;
Figure 3B illustrates the second mode of the present invention;
Figure 3C illustrates the third mode of the present invention;
Figure 4 is a state diagram of the present invention.

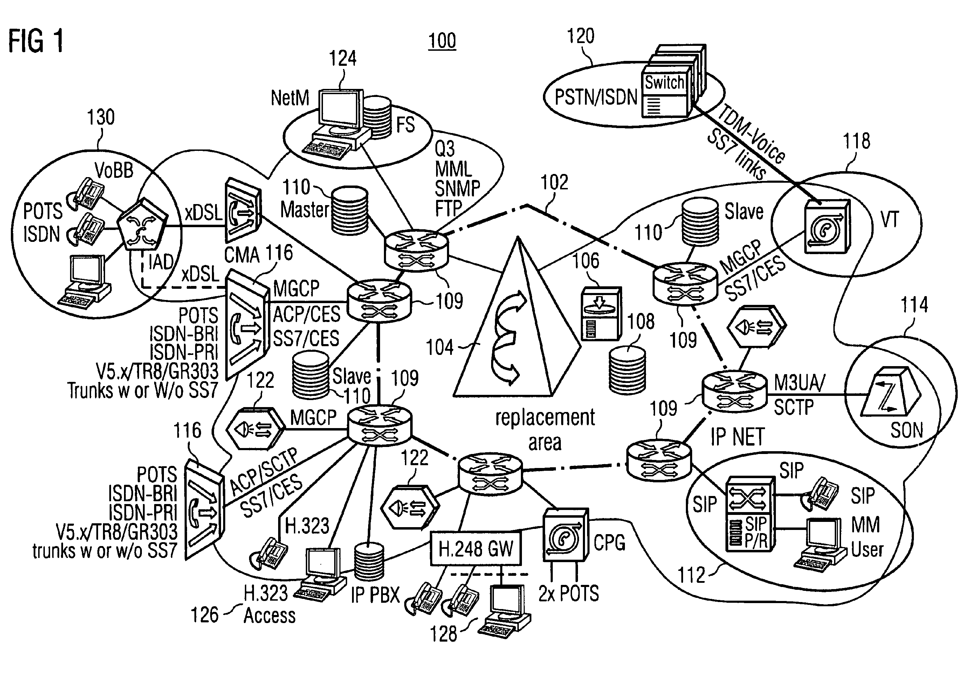

The present invention provides a disaster recovery method, system and apparatus for recovering the operability of a network after a disaster. Such a network 100 may be, for example, the Internet Protocol network shown in Figure 1. Of course, the network shown here is merely an example and it shall be appreciated that the invention is applicable to any type of network. In any event, the network 100 shall be discussed as an understanding of the network components is important for the development of the discussion of the present invention.

The invention generally relates to selecting a replacement area 102 that defines a predetermined set or sub-set of components that are to be replaced, or made redundant, in the expectation of a disaster. The invention further relates to providing modes of operation, that spell out procedures for handling different phases of the disaster. It shall also be appreciated that the invention further relates to the appropriate selection of the components to be replaced, or otherwise redundant. These and other aspects shall be discussed in more detail.

While the particular components of the network may be other than those shown, it will be useful to provide a description of those elements. Particularly, as already mentioned, the selection of the components to be replaced after a disaster is also an aspect of the invention and it is useful here to discuss the component features at least in brief.

The network 100 communications are coordinated by a soft switch 104. The soft switch implements control of access equipment, media gateways and resource servers and coordinates the network intelligence of the various components for carrying out these implementations. The soft switch 104 employs a modular architecture that allocates these functions as shown in the figure.

In a telecommunications network, a switch is a device that channels incoming data from any of multiple input ports to the specific output port that will take the data toward its intended destination. In a wide area packet-switched network such as the IP network here, a switch further determines from the IP address in each packet where to send the packet, e.g., the output port, to use for the next part of its trip to the intended destination.

At the heart of the soft switch 104 is the call feature server (CFS) that handles call control such as call signal processing, call establishment, and service. It may also provide related management aspects, such as collection of account and billing data. The soft switch 104 may provide connection control for voice or multimedia connections and ensure proper interworking between a public switched telephone network (PSTN) and IP-based networks by managing the mediation resources at media gateways. It may also be designed to handle Signaling System 7 (SS7) signaling delivered over Stream Control Transmission Protocol / Internet Protocol (SCTP/IP), classic Time-division multiplexing (TDM) connections, and asynchronous transfer mode (ATM) high-speed signaling links. The soft switch 104 may also provide management interfaces to provide user control of the network 100.

The soft switch may utilize supporting server platforms for handling various tasks. An Open Service Platform (OSP) 106, for example, may deliver open programming interfaces via several application building blocks by means of open Application Programming Interfaces (APIs). A Registration and Routing Server 108 may supply functions for H.323 terminals, such as user registration authorization access to Voice over IP (VoIP) services, as stored in a central database. The H.323 is part of a larger group of ITU recommendations for multimedia interoperability called H.3x and a detailed discussion thereof is referred to this standard.

The edge routers 109 connect the soft switch 104, and associated elements, to the network 100. They route data packets at the control of the soft switch 104 between one or more local area networks (LANs).

Data concerning the users and for carrying out operations may be maintained by the series of master-slave directory servers 110 shown. The database system is enabled in the aspect shown using light weight directory access protocol (LDAP).

A Proxy and Redirect Server 112 may be provided to connect subscribers and domains to the network 100. In other words, it establishes calls between clients. In the network 100 shown, it opens new session internet protocol (SIP) based networks by providing interworking with PSTN/ Integrated Services Digital Network (ISDN) and H.323 networks.

There could also be provided a Multiprotocol Signaling Transfer Point and Signaling Gateway 114 that handles SS7 over TDM, SS7 over ATM, and SS7 over IP. It serves as a bridge between fixed and mobile TDM networks, Intelligent Network (IN) platforms and Next Generation Networks.

An Access Gateway (AG) 116 may be provided to supports legacy interfaces, i.e., Plain Old Telephone Service (POTS), etc. The Access Gateway 116 provides the gateway functionality for the existing access infrastructure to the network 100.

The Media Gateways 118 are mediation elements between circuit switched voice networks and the network 100. They are controlled by the soft switch 104 and relay voice, fax, modem and ISDN data traffic over the network 100 using Quality of Service (QoS) enabled IP technology. These media gateways use trunk interfaces to interconnect with, for example, the circuit-switched voice networks 120 shown in the figure.

There is also shown a Resource Server 122, which is controlled by the soft switch 104, that provides announcements and user interactive dialogues for the network 100. The Resource Server may also create new customized services, for example, customized announcements/dialogues, such as those supported by VoiceXML (a standardized programming language for voice services based on well-known XML Internet technology) and automatic text-to-speech conversion technologies.

A Network Manager 124 may be provided to support operation, administration, and maintenance (OA&M) tasks. The Network Manager may provide fault management for preventive and corrective measures. It may provide such features as configuration management that assists with the creation, modification and deletion of any object (e.g. subscriber data base entry, TDM or IP trunk, route, signaling link). It could also support automatic collection of accounting records via file transfer, perform record verification and format conversion. It may also provide performance management, such as collecting and processing network and service performance data to ensure the QoS. There may also be security management that ensures access rights to authorized operators.

There is also shown a Subscriber Control Interface (SCI) 126. It is used for communication between the call feature server and the H.323 clients (e.g., multimedia PCs). Thus, Customer Premises Equipment (CPE) used for multimedia applications may be directly controlled by the soft switch 104 using, for example, H.323.

A Media gateway 128 may be provided as a control interface (or access gateway) that specifies, for example, media Gateway Control Protocols (MGCP and MEGACO) (IETF)/H.248 (ITU-T). These protocols may be used by the soft switch 104 to control, for example, the Media Gateways 118, the Resource Server 122, the Access Gateway 116, and/or corresponding endpoints at customer premises.

A Voice over Broadband (VoBB) unit 130 is also shown. The VoBB unit 130 may provide voice and next generation services and features over high-speed access to packet-based subscribers. The traffic travels end-to-end over IP from the user's terminal via broadband access, up along the network 100 and back. It may provide, for example, Voice over DSL, Voice over Cable, Voice over AnyNet and H.323/SIP.

While the present invention has been described with reference to particular elements shown in Figure 1, it is reiterated that the particular elements are examples only, and that the network 100 may include other (or additional) elements than that shown.

With a rudimentary review of the network 100, we now turn our attention to the disaster recovery aspects of the present invention. As mentioned, the present invention decides those elements that are to be included in the replacement area 102, which is to be maintained and replaced in the case of a disaster. It shall be immediately appreciated that the appropriate and efficient selection of these elements is of significant advantage for recovering the operability of the network.

In the aspect shown in Figure 1, the soft switch 104 controls it's dependent units mostly via IP protocol. It shall be noted that merely a few legacy SS7 units are connected using TDM. Using the IP protocol the self routing mechanism of IP protocol, the invention switches the control of the dependent unit or units to another geographical location. To that end, the invention stores the network or sub-network addresses in a routing table in the replacement area and updates the same to maintain the addresses of the dependent units in case disaster recovery is required. In that instance, the present invention employs the addresses stored in the routing table to reroute the control of the dependent units.

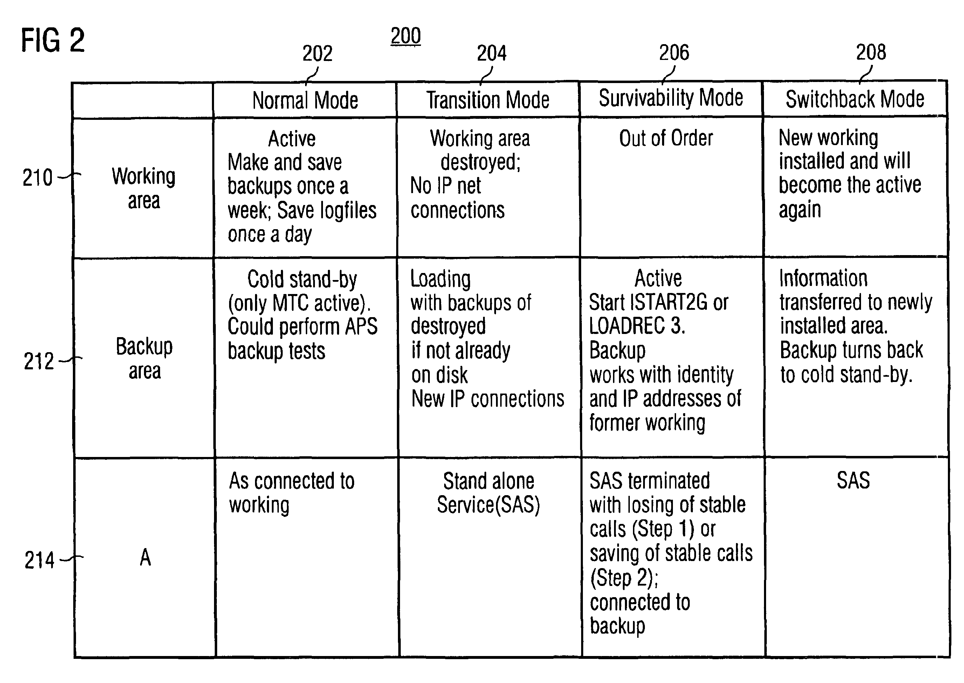

In order to provide for and carry out disaster recovery, the present invention employs modes of operation. The modes of operation will be better understood from the mode of operation table 200 of Figure 2, wherein the modes of operation 202-208 are selected by the invention for at least the working area 210, which corresponds to the replacement area (102, Figure 1). The present invention further provides modes of operation for the backup area 212 and, optionally, for access gateways 214. In general, the invention provides a normal mode 202, a transition mode 204, a survivability mode 206 and / or a switchback mode 208.

It shall be appreciated that some outages require special handling because they relate to a legacy network. These may include the access gateway(s) 116, that connect to POTS ISDN lines, V5.x or trunks. In case an outage occurs in these areas, it shall be appreciated that the network 100 is likely to have little information or control over the sub network. In this case, the invention makes alternate plans for either recovery of the sub network operability or, at least, makes preparations for the recovery of the sub network. This will be described later.

Now in more detail, in the normal mode 202 the working area 210 is active and performs normal call processing with a full feature set. At this time, the invention maintains the backup area 212 in stand-by. In stand-by, the invention causes, for example, the backup area 212 to initiate tests and supervise the replacement area 102.

The working area 210, as well as a plurality of working areas (not shown) are connected via DCN, for example, to the network manager (124, Figure 1). The dependent units are connected mainly via IP. In the invention, the backup area 212 is connected to a minimum of elements in the network in order to both make the backup area 212 less obtrusive and to require the least amount of resources in installing the backup area. In the present invention, the backup area is connected via DCN to the network manager such that the backup area 212 can maintain and supervise the network 100.

In preparation for a disaster, the present invention causes the databases of the units included in the replacement area to be periodically backed up. This may be cyclic in the invention and set to any increment, such as weekly. The invention stores these backup(s) on the network manager file server, for example. For larger backup files, such as the CP backup file, the invention may cause the backup to be stored on a fast storing medium, such as hard disk or zip drive. In addition, the invention generates log files that log the network events, particularly the backup log. The log files may be transferred to the network manager on a periodic basis, such as once per day. Of course, one skilled in the art understands how to generate backup and log files and will not be described here in detail.

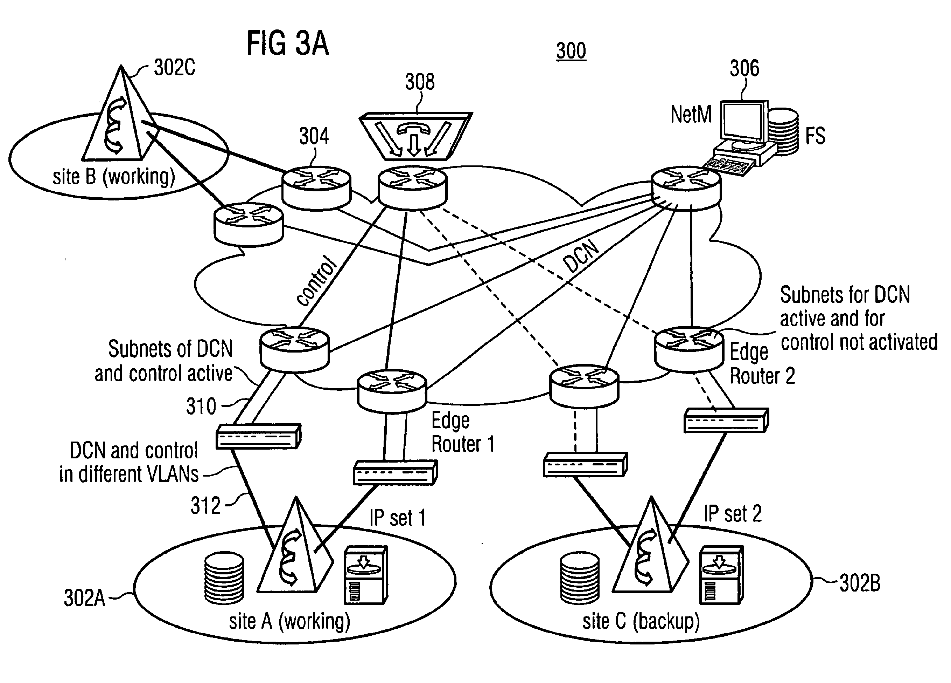

The network 300 in the normal mode is depicted in Figure 3A. As shown, the replacement area 302A, designated as the working area A, is connected to the network 300 through the edge router(s) 304 and functions as normal. One or more backup areas 302B and 302C, etc., are shown connected through edge routers 304 and operate in the standby mode as discussed earlier. Further shown is the network manager 306 that provides management services to the network operator as previously discussed. There also may be one or more access gateways 308.

As will be appreciated from Figure 3A, the sub networks of DCN and control 310 connected to the working area 302A are active in this mode. This is because the working area 302A is active and employs these lines for sending control signals to the dependent units of the network. The DCN and control are situated in the figure in different VLANs for network integrity. A VLAN (virtual or logical LAN) is a local area network with a definition that maps workstations on some other basis than geographic location. In this mode, the sub networks for DCN are active in order for the information to be sent to the network manager from the backup area 302B and vice versa. However, the control of the backup area 302B is not activated.

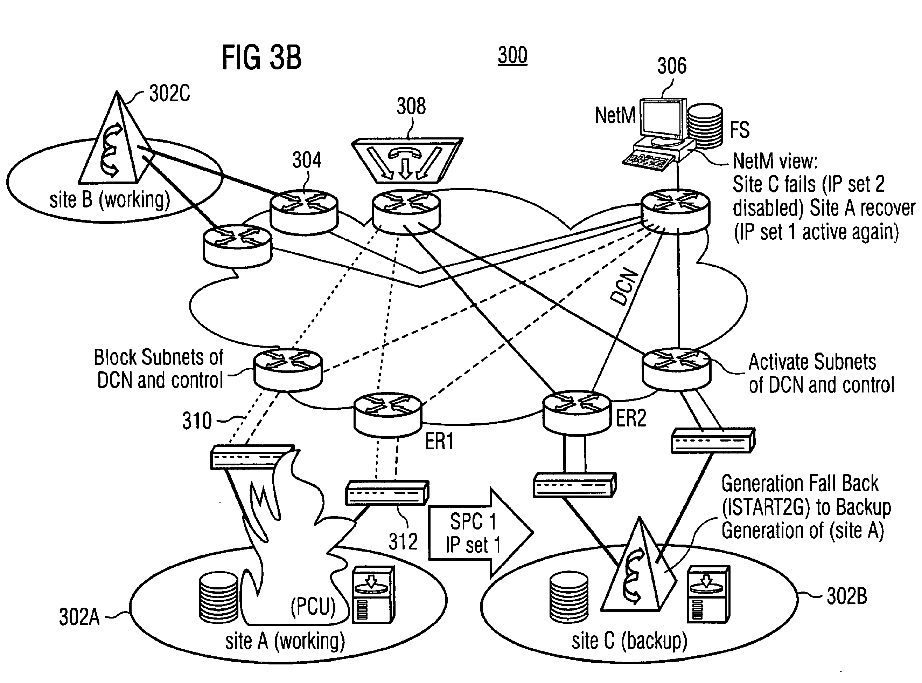

When a disaster occurs, the present invention enters the transition mode 204 shown in Figure 2. In effect, the transition mode of the present invention isolates the disaster from the network. This is shown in Figure 3B, wherein (from the network manager 306 point of view) the destruction of the working area 302A appears to be isolated from the network 300. When this occurs, the present invention causes the replacement area 302A to be isolated from the network. This is done by configuring the appropriate edge router and configuring the IP backbone when static routes are used. After moving the IP addresses of the replacement area, security information may also be entered into the edge router of the backup area. On addition, the IP addresses of the backup area may be resued. Then, the network 300 routes the control information from the dependent units to the backup area 302B or 302C and vice versa.

Here, the sub networks of DCN and control for the working area 302A are blocked. At this time, the sub networks of the DCN and control are activated in order to allow the backup area 302 B or 302 C to control the network 300.

In parallel to the aforesaid operations, the database backup, are transferred to the backup area. Once transferred, the backup files are unpacked into the appropriate backup directories.

In the present invention, the edge router is configured within a time specified by the customer, such as within 1 hour of the disaster. When the customer is not the owner of the network, the timing of the edge router reconfiguration may be negotiated as part of the operation policy of the ISP.

Further, dependent units including a stand alone service (SAS) are caused to initiate their SAS routines. If necessary, that is where the features are not recoverable from the destroyed soft switch, the dependent units are caused to execute a reduced feature set.

At this time, the present invention re-activates the network with the backup area. The PCUs are activated first via scripts that change the IP addresses and load data of their destroyed counterparts. In the invention, the units selected in the backup area, such as the OSP and the registration and routing server are also activated in the same manner.

With respect to the particular embodiment of the IP network, after the PCUs are activated the present invention triggers a Recovery command that causes the loading of the generation files of the destroyed soft switch in the SSNC and CP. From the point of view of the network manager, it registers an outage of the backup area. Once the Recovery is finished, the CP and SSNC contain the IP addresses of the destroyed soft switch. The network manager, however, only sees a return of the destroyed soft switch and an absence of the backup area. In other words, the network manager believes that the working area has come back on line, when in fact it is the backup area that has replaced, or assumes the identity of, the working area. With this arrangement, the present invention seam-lessly replaces the working area.

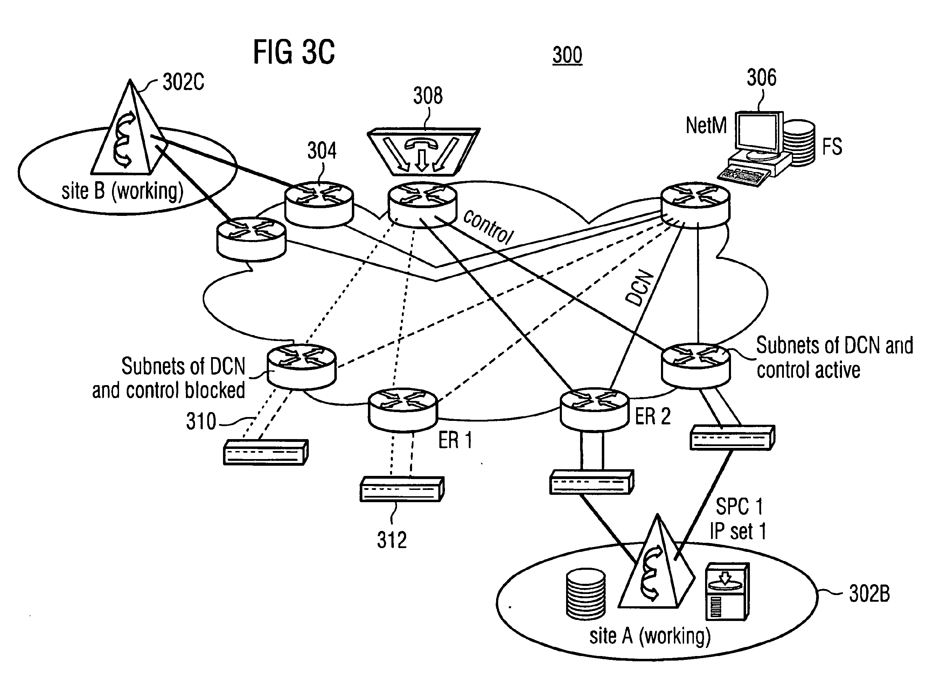

Now that the working area has been replaced, the invention enters the survivability mode, 206 Figure 2. At this time, the backup area provides all feature sets previously provided by the replaced area. The backup area as will be seen from Figure 3C runs with a foreign identity, now indicated as working area 302A.

In any event, certain post processing procedures need to be executed in order to complete the transition. The activation of the survivability mode accomplishes this by resetting the dependent units and terminating the stand alone service(s). Further, the invention deactivates the AMA feature at startup of the backup area, as no corresponding AMA file is available at startup of the backup. In other words, the invention explicitly activates the AMA feature again, which creates a new AMA-file to collect the AMA tickets.

In the survivability mode, the backup area 302B, operating as the working area, has the sub networks of DCN and control active. The sub networks of DCN and control remain blocked for the destroyed working area 302A.

As a further enhancement, the invention may also provide the capability to rescue stable calls. With reference to the particular IP network described here, the invention blocks the communication of the soft switch during the Recovery scripts. The invention, however, maintains communication of the soft switch to the network manager and associated file server. According to this arrangement, the SAS is not automatically terminated upon the restart. At this time, the invention sets the SAS dependent values in the activated backup area.

The invention maintains the survivability mode until the original working area is reestablished. When it does occur that the original working area is again operable, the invention enters the switchback mode, 208 Figure 2. It may be, for example, that the ISP has rebuilt and installed a new soft switch at the site of the original working area. At this time, the control is switched back to the reestablished working area.

As previously mentioned, the present invention also encompasses the selection of components for the replacement area. In the present invention, the decision is made to include those elements which are the fundamental components for the soft switch to operate. These include the soft switch itself plus the sub-components needed to perform the main functions of the soft switch.

In one aspect of the invention, the replacement area is selected to include the Open Service Platform (OSP) 106. As discussed, the OSP, delivers open programming interfaces via several application building blocks by means of open Application Programming Interfaces (APIs). Further, the invention may also include in the replacement area, the Registration and Routing Server 108. In the particular embodiment, the Registration & Routing Server supply functions for H.323 terminals, such as user registration authorization access to Voice over IP (VoIP) services, as stored in a central database.

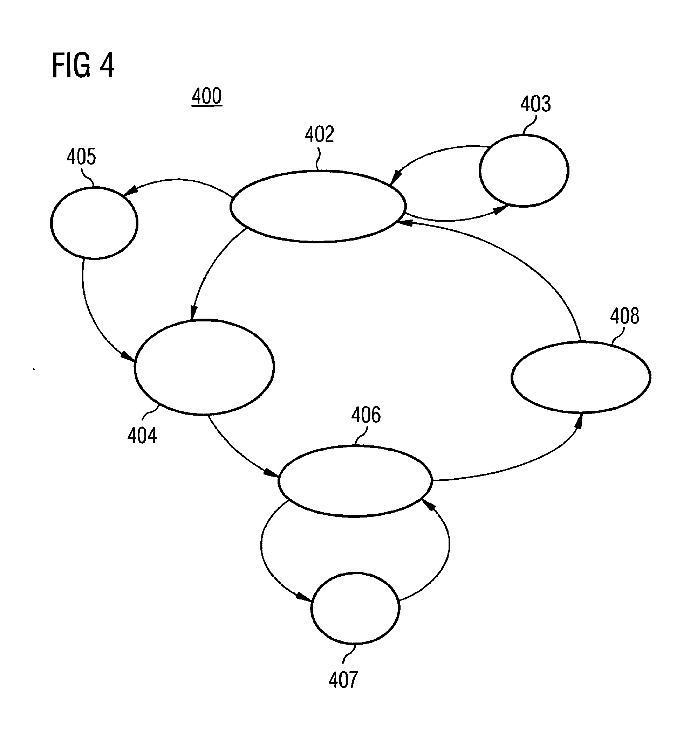

The modes of operation are shown in Figure 2 as a table of modes. The modes may also be considered as a method of operation. This is illustrated by the state diagram shown in Figure 4. In the normal mode, indicated by state 402, the working area is active, making and saving backups periodically and saving log files. In this state 402, the backup area is in cold standby, such that only the MTC is active, i.e., can only perform backup tests. Any access gateways in this state 402 are connected and working as normal. In state 403, the working area is selected to include the switch and a supporting device that provides call services.

In the transition mode illustrated in state 404, the working area is destroyed and no IP network connections remain. The backup area is loaded with the backup data of the destroyed working area. Any access gateways are maintained as a stand alone service. At this time, in state 405, the invention may optionally maintain stand alone service calls between the first mode and the second mode.

In another variation, the backup area retains its IP addresses. This may be necessary when the customer, for example, assigns the IP addresses to geographical locations.
This may occur by the customer initiating a maintenance procedure, wherein the TDM maintenance scheme takes over the IP maintenance.

In either variant, the change of the controlling working area should be propagated within the affected units. To that end, the network manager changes the assignment of the controlled units from working to backup area. For all subscribers, the assignment to the working area domain is changed in the network manager applications as well. The controlled units activate the new set of IP addresses, or otherwise refresh their DNS cache, according to the above-described variants.

The IP addresses of the units within the replacement area could be predefined. In this case, after the PCUs are activated a system Recovery script is triggered that loads the backup generations into the CP and SSNC. This means that network files, such as a NET.CONFIG should be entered again in order to ensure that the correct IP addresses are stored.

In the survivability mode illustrated in the state 406, the working area is out of order, i.e., inoperable and off-line. The backup area is started using, for example, the scripting routines Recovery, or any other suitable start up routine, and the backup area works with the identity and IP addresses of the former working area. In the access gateways, the SAS is terminated, which may have the result of losing stable calls. As described earlier, the invention provisions for saving the stable calls. In any event, the access gateways are connected to the backup area. In a further state (407), the backup area assumes the identity of the working area in the second mode such that, from a perspective of the IP network, the backup area is the working area.

In the switchback mode illustrated in state 408, the original working area is restored or revived and installed. It is activated and placed back online. The backup area transfers the information to the newly installed working area and the backup area returns to the standby state. Any SAS continues operation as it ran with the backup area.

It shall be appreciated that, while the present invention has been explained with reference to the particular figures and aspects shown, the present invention is not so limited, but may in fact encompass the broader invention, as defined by the several claims.

## Claims

1. A method for disaster recovery of an IP network having a working area, which comprises at least a switch for routing traffic through the IP network, comprising the steps
**characterized in that**:
providing a first mode (402) wherein the working area is active and routes traffic through the IP network, a backup area that has a functionality to route the traffic through the IP network is maintained in standby, and IP addresses relating to the traffic are stored in a storage area;
providing in the backup area another switch for routing traffic through the IP network and only fundamental components needed to perform main functions of the another switch, and
providing, when the working area is inoperable due to a disaster, a second mode (406) wherein the backup is active such that the backup area routes the traffic through the IP network with the IP addresses stored in the storage area.

2. The method of claim 1, further comprising the step of providing a third mode (404) wherein the backup area is loaded from the backup storage area of IP addresses.

3. The method of any of the preceding claims, further comprising the step of providing a fourth mode (408) wherein a new working area is installed and replaces the backup area.

4. The method according to any of the preceding claims, further comprising the step (407) of the backup area assuming the identity of the working area in the second mode such that, from a perspective of the IP network, the backup area is the working area.

5. The method according to any of the preceding claims, further comprising the step (403) of selecting the working area to include the switch and a supporting device that provides call services.

6. The method according to any of the preceding claims, further comprising the step (405) of maintaining stand alone service calls between the first mode (402) and the second mode (406).

7. A disaster recovery system for an IP network (300), **characterized in that**:
a working area (302A) including at least a switch that is active in a first mode for routing traffic through the IP network (300) according to an IP address associated with the traffic;
a backup area (302B) including at least another switch that is in standby in the first mode and activated in a second mode when the working area (302B) is inoperable due to a disaster;
wherein the backup area includes only fundamental components needed to perform main functions of routing calls through the IP network of the another switch, and
a storage area (306), wherein the storage area stores IP addresses utilized by the working area (302A) in the first mode and reads the IP addresses to the backup area (302B) in the second mode.

8. The system of claim 7, further comprising an edge router (304) for selectively activating, in the second mode, control connection of the backup area to the IP network.

9. The system according to any of claims 7 or 8, wherein the backup area (302B) includes the switch and a supporting device that provides call services.

10. The system according to any of claims 7 to 9, further comprising a network manager (306) for providing network managing services and having a file server for maintaining the storage area.

11. The system according to any of claims 7 to 10, further comprising an edge router (304) configured such that, upon occurrence of the disaster, and in response thereto, the edge router isolates the working area from the IP network.

## Patentansprüche

1. Verfahren zur Behebung katastrophaler Fehler eines IP-Netzes, welches einen Arbeitsbereich aufweist, der mindestens eine Vermittlung zur Lenkung des Verkehrs durch das IP-Netz umfasst, **dadurch gekennzeichnet, dass**:
ein erster Betriebs-Modus (402) bereitgestellt wird, in dem der Arbeitsbereich aktiv ist und Verkehr durch das IP-Netz lenkt, ein Sicherungsbereich, der eine Funktionalität zum Lenken des Verkehrs durch das IP-Netz aufweist, in Bereitschaft gehalten wird und IP-Adressen, die sich auf den Verkehr beziehen, in einem Speicherbereich gespeichert sind;
im Sicherungsbereich eine andere Vermittlung zum Lenken des Verkehrs durch das IP-Netz sowie lediglich die grundlegenden Komponenten, die benötigt werden, um die hauptsächlichen Funktionen der anderen Vermittlung auszuführen, bereitgestellt werden; und
wenn der Arbeitsbereich aufgrund eines Katastrophenfalles nicht betriebsbereit ist, ein zweiter Betriebs-Modus (406) bereitgestellt wird, in dem der Sicherungsbereich aktiv ist, sodass der Sicherungsbereich anhand der IP-Adressen, die im Speicherbereich gespeichert sind, den Verkehr durch das IP-Netz lenkt.

2. Verfahren gemäß Anspruch 1, welches ferner den Schritt umfasst, einen dritten Betriebs-Modus (404) bereitzustellen, bei dem der Sicherungsbereich aus dem Speicherbereich der IP-Adressen geladen wird.

3. Verfahren gemäß einem der vorstehenden Ansprüche, welches ferner den Schritt umfasst, einen vierten Betriebs-Modus (408) bereitzustellen, bei dem ein neuer Arbeitsbereich installiert wird und den Sicherungsbereich ersetzt.

4. Verfahren gemäß einem der vorstehenden Ansprüche, welches ferner den Schritt (407) umfasst, dass der Sicherungsbereich die Identität des Arbeitsbereiches im zweiten Betriebs-Modus annimmt, sodass aus der Perspektive des IP-Netzes der Sicherungsbereich der Arbeitsbereich ist.

5. Verfahren gemäß einem der vorstehenden Ansprüche, welches ferner den Schritt (403) umfasst, den Arbeitsbereich so zu wählen, dass er die Vermittlung sowie ein unterstützendes Gerät beinhaltet, welches Verbindungsdienste bereitstellt.

6. Verfahren gemäß einem der vorstehenden Ansprüche, welches ferner den Schritt (405) umfasst, Standalone-Diensteverbindungen zwischen dem ersten Betriebs-Modus (402) und dem zweiten Betriebs-Modus (406) aufrecht zu erhalten.

7. System zur Behebung katastrophaler Fehler für ein IP-Netz (300), **gekennzeichnet durch**:
einen Arbeitsbereich (302A), welcher mindestens eine Vermittlung beinhaltet und der in einem ersten Betriebs-Modus aktiv ist und gemäß einer IP-Adresse, die dem Verkehr zugeordnet ist, Verkehr **durch** das IP-Netz (300) lenkt;
einen Sicherungsbereich (302B), welcher mindestens eine andere Vermittlung beinhaltet und der sich im ersten Betriebs-Modus im Bereitschafts-Zustand befindet und in einem zweiten Betriebs-Modus aktiviert wird, wenn der Arbeitsbereich (302A) aufgrund eines katastrophalen Fehlers nicht betriebsbereit ist;
wobei der Sicherungsbereich lediglich grundlegende Komponenten umfasst, die benötigt werden, um die hauptsächlichen Funktionen der Rufweglenkung von Verbindungen **durch** das IP-Netz der anderen Vermittlung auszuführen, und
einen Speicherbereich (306), wobei der Speicherbereich IP-Adressen speichert, die von dem Arbeitsbereich (302A) im ersten Betriebs-Modus verwendet werden, und im zweiten Betriebs-Modus die IP-Adressen an den Sicherungsbereich (302B) ausliest.

8. System gemäß Anspruch 7, welches ferner einen Edge-Router (304) umfasst, um im zweiten Betriebs-Modus selektiv die Steuerverbindung des Sicherungsbereichs zum IP-Netz zu aktivieren.

9. System gemäß einem der Ansprüche 7 oder 8, wobei der Sicherungsbereich (302B) die Vermittlung und ein unterstützendes Gerät enthält, welches Verbindungsdienste bereitstellt.

10. System gemäß einem der Ansprüche 7 bis 9, welches ferner einen Netz-Manager (306) umfasst, um Netz-Managementdienste bereitzustellen, sowie einen Dateiserver aufweist, um den Speicherbereich zu pflegen.

11. System gemäß einem der Ansprüche 7 bis 10, welches ferner einen Edge-Router (304) umfasst, der so konfiguriert ist, dass bei Eintreten eines Katastrophenfalles und als Reaktion darauf der Edge-Router den Arbeitsbereich von dem IP-Netz isoliert.

## Revendications

1. Procédé de reprise après sinistre d'un réseau IP ayant une zone de travail, qui comprend au moins un commutateur pour acheminer le trafic à travers le réseau IP, **caractérisé par** les étapes :
prévoir un premier mode (402) dans lequel la zone de travail est active et achemine le trafic à travers le réseau IP, une zone de secours qui a une fonctionnalité pour acheminer le trafic à travers le réseau IP est maintenue en attente, et les adresses IP relatives au trafic sont stockées dans une zone de stockage;
prévoir dans la zone de secours un autre commutateur pour acheminer le trafic à travers le réseau IP et seulement les composants fondamentaux nécessaires pour exécuter les fonctions principales de l'autre commutateur, et
prévoir, lorsque la zone de travail est inexploitable en raison d'un sinistre, un deuxième mode (406) dans lequel la procédure de secours est active de sorte que la zone de secours achemine le trafic à travers le réseau IP avec les adresses IP stockées dans la zone de stockage.

2. Procédé selon la revendication 1, comprenant en outre l'étape de prévoir un troisième mode (404) dans lequel la zone de secours est chargée à partir de la zone de stockage de secours des adresses IP.

3. Procédé selon l'une quelconque des revendications précédentes, comprenant en outre l'étape de prévoir un quatrième mode (408) dans lequel une nouvelle zone de travail est installée et remplace la zone de secours.

4. Procédé selon l'une quelconque des revendications précédentes, comprenant en outre l'étape (407) dans laquelle la zone de secours assume l'identité de la zone de travail dans le deuxième mode de sorte que, d'une perspective du réseau IP, la zone de secours est la zone de travail.

5. Procédé selon l'une quelconque des revendications précédentes, comprenant en outre l'étape (403) de sélection de la zone de travail pour qu'elle inclue le commutateur et un dispositif de support qui fournit des services d'appels.

6. Procédé selon l'une quelconque des revendications précédentes, comprenant en outre l'étape (405) de maintien d'appels de service autonomes entre le premier mode (402) et le deuxième mode (406).

7. Système de reprise après sinistre pour un réseau IP (300), **caractérisé en ce que** :
une zone de travail (302A) comprenant au moins un commutateur qui est actif dans un premier mode pour acheminer le trafic à travers le réseau IP (300) selon une adresse IP associée au trafic;
une zone de secours (302B) comprenant au moins un autre commutateur qui est en attente dans le premier mode et activé dans un deuxième mode lorsque la zone de travail (302B) est inexploitable en raison d'un sinistre;
dans lequel la zone de secours comprend seulement les composants fondamentaux nécessaires pour exécuter les fonctions principales d'acheminement des appels à travers le réseau IP de l'autre commutateur, et
une zone de stockage (306), la zone de stockage stockant les adresses IP utilisées par la zone de travail (302A) dans le premier mode et lisant les adresses IP à la zone de secours (302B) dans le deuxième mode.

8. Système selon la revendication 7, comprenant en outre un routeur de périphérie (304) pour activer sélectivement, dans le deuxième mode, une connexion de commande de la zone de secours au réseau IP.

9. Système selon l'une quelconque des revendications 7 ou 8, dans lequel la zone de secours (302B) comprend le commutateur et un dispositif de support qui fournit des services d'appels.

10. Système selon l'une quelconque des revendications 7 à 9, comprenant en outre un gestionnaire de réseau (306) pour fournir des services de gestion de réseau et ayant un serveur de fichiers pour maintenir la zone de stockage.

11. Système selon l'une quelconque des revendications 7 à 10, comprenant en outre un routeur de périphérie (304) configuré de sorte que, à l'occurrence d'un sinistre, et en réponse à celui-ci, le routeur de périphérie isole la zone de travail du réseau IP.
